# EUROPEAN PATENT APPLICATION

(11) **EP 1 733 623 A1**
(43) Date of publication of application: **20.12.2006**
(21) Application number: 06397011.5
(22) Date of filing: 12.06.2006
(51) Int. Cl.: A23C 19/09

(54) **Method for liquefaction of cured cheese**

(30) Priority: 13.06.2005 FI 20050624
(71) Applicant: Oy Glubikan AB, 07955 Tesjoki (FI)
(72) Inventor: LÖV, Jeff, FI-07955, TESJOKI (FI); LÖV, Monica, FI-07955, TESJOKI (FI)
(74) Representative: Haimelin, Jukka Ilmari

(57) **Abstract**

A method is disclosed for liquefaction of cured cheese. Firstly a liquid mixture with a dry matter content of at least 25 % by weight is produced having the dry matter content consisted mainly of milk dry matter. Said mixture is kept at a pressure of about 0.5 bar to 1.5 bar, and the temperature of the mixture is raised respectively at least to a target temperature of about 75 °C to about 65 °C. The mixture is kept under a stirring action, and cured cheese is added to the mixture. The intensity of the adding of the cheese is maintained to keep the temperature essentially at the actual target temperature, and the heating intensity is selected to keep the temperature difference between the mixture and the heating element used in a value of less than about 10 °C.

## Description

The present invention concerns a method, by means of which cured cheese can be brought into a state where it is gone into solution. The solute cheese can straight be used in several food products. Especially the cheese, liquefied using the method of the present invention, posses the property being soluble in cold water in dried state.

Cured cheese is liquefied in accordance with the invention so, that firstly a liquid mixture is produced having a dry matter content of 25 % by weigh, in which the dry matter consists of milk dry matter ingredients. The mixture is kept under stirring action in a pressure of at least 0.5 bar, and its temperature is gently raised. The process may be carried out in different pressures, usually at the ambient atmospheric pressure. The variation in pressures at which the process is conducted may be from 0.5 bar to 1.5 bar. The target minimum temperature depends on the prevailing pressure. A process conducted in a lower pressure requires a higher temperature, whereas in a higher pressure the process proceeds gently at a lower temperature. As minimum target temperature for a process conducted under the ambient pressure can be set about 72 °C. In the pressure of 0.5 bar the target value for the minimum temperature should be about 75 °C, and in the higher pressure of 1.5 bar the minimum target value may remain at 65 °C. The mixture is maintained under stirring action. The stirring action is to be selected having no essential shearing action to the mixture. Cured cheese is then fed into the mixture. The amounts added should be selected so that no essential drop in the temperature under the actual target value is caused. Another factor limiting the intensity of the process is the fact that a contact of the mixture to a surface having a temperature of about 10 °C higher than the temperature of the mixture, should be avoided.

There is also no reason to elevate the temperature essentially over the selected target temperature. Especially the temperatures as high as the coagulation temperature of any ingredient of the mixture are to be avoided.

When the invention is utilized, an initiating mixture is firstly to be prepared, i.e. a liquid mixture, having a dry matter fraction consisting of milk dry matter constituents. The composition of the dry matter fraction is in this connection mainly in conformity with the composition of milk dry matter, although some components may be removed, at least partly, as a part of the fat component. The dry matter content of the mixture must be in the initial stage of the process of the invention at least 25 % by weight. The dry matter content may be brought to this level for instance by adding milk powder into milk or into some liquid milk fraction. One possibility for increasing the dry matter content of the initiating mixture is to use liquefied cheese from previous batches.

The temperature of this initiating mixture is raised with a gently heating into the target temperature (65 °C to 75 °C), usually about 72 °C. A stirring action is maintained in the solution, and cured cheese to be liquefied is added. The adding intensity is to be retained on a level where the temperature of the solution is not decreased essentially below the target value, whereby simultaneously care is to be taken that the solution is not brought into contact with a surface having a temperature essentially higher than the temperature of the mixture. In practise the allowed difference is not higher than about10 °C.

The addition of the cheese to be liquefied may be continued under said circumstances until the dry matter content of about 40 % by weight in the solution is reached. The solution having a dry matter content of this order is still liquid and can be pumped at the target temperature.

The cheese liquefaction process can be performed in batches or continuously. In a continuous process the mixture is maintained at least at the target temperature and in the target consistency in the circulating flow maintained by pumping. Subsequent batches containing liquefied cheese are removed from the circulation, and compensating cheese to be liquefied as well as compensating liquid are added in the same order to the circulation keeping the provision concerning the temperature and the consistency in mind. The compensating liquid may be water, milk, or a milk fraction. Such milk fraction may be for instance whey.

The cheese to be liquefied may be any cured cheese. For instance lumps remaining over in the cheese production are suitable. Such cheese may be processed in lump form or the lumps can be comminuted before used in the process.

The cured cheese liquefied in the process may be used as such in producing several food stuffs, such as spreads or dressings, where the basic taste can be adjusted by selecting properly the sort of the cheese used.

The liquefied product can also be dried afterwards. The dried product is preferably produced in the form of fine particles, for instance using the spray-drying techniques. The dried product has the property being completely soluble in cold water. In addition it has the property to be preserved, which fact adds the possibilities to use it.

## Claims

1. A method for liquefaction of cured cheese, wherein a liquid mixture with a dry matter content of at least 25 % by weight is produced having the dry matter content consisted mainly of milk dry matter, the mixture is kept at a pressure of about 0.5 bar to 1.5 bar, and the temperature of the mixture is raised respectively at least to a target temperature of about 75 °C to about 65 °C, a stirring action is maintained in the mixture, and cured cheese is added to the mixture, whereby the intensity of the adding of the cheese is maintained to keep the temperature essentially at the actual target temperature, and the heating intensity is selected to keep the temperature difference between the mixture and the heating element used in a value of less than about 10 °C.

2. The method according to claim 1, wherein the mixture is kept at the ambient atmospheric pressure and the temperature of the mixture is raised to a temperature of at least 72 °C.

3. The method according to claim 1 or 2, wherein the dry matter content of the mixture is elevated to 40 % by weight at the most.

4. The method according to claim 3, wherein the dry matter content of the mixture is maintained by adding a liquid.

5. The method according to claim 4, wherein the added liquid is water.

6. The method according to claim 4, wherein the added liquid is milk.

7. The method according to claim 4, wherein the added liquid is a fraction from milk processing.

8. The method according to claim 7, wherein the liquid is whey.

9. The method according to claim 1 or 2, wherein milk fortified with milk powder is used as the process liquid.
